# EUROPEAN PATENT APPLICATION

(11) **EP 1 690 909 A1**
(43) Date of publication of application: **16.08.2006**
(21) Application number: 04818454.3
(22) Date of filing: 04.11.2004
(51) Int. Cl.: C09K 3/18, C08F 214/02, C08F 220/20, C09D 133/04, D06M 15/277, D06M 13/385

(54) **AQUEOUS LIQUID DISPERSION OF WATER AND OIL REPELLENT AGENT**

(30) Priority: 13.11.2003 JP 2003383495
(71) Applicant: DAIKIN INDUSTRIES, LTD., Osaka-shi, Osaka 530-8323 (JP)
(72) Inventor: FUKUMORI, Masaki, Daikin Industries, Settsu-shi, Osaka 566-8585 (JP); AGA, Tsukasa, Daikin Industries, Settsu-shi, Osaka 566-8585 (JP)
(74) Representative: HOFFMANN EITLE
(86) International application number: PCT/JP2004/016319
(87) International publication number: WO 2005/047417

(57) **Abstract**

Disclosed is an aqueous liquid dispersion of a water and oil repellent agent which contains (I) a copolymer between a polymerizable compound having a perfluoroalkyl or perfluoroalkenyl group and an acrylic acid group, methacrylic acid group or alpha-substituted acrylic acid group, a chlorine-containing polymerizable compound, and another optionally present copolymerizable compound which is copolymerizable with the foregoing compounds, and (II) a hydrochloric acid trapping compound. Such an aqueous liquid dispersion of a water and oil repellent agent is excellent in shelf life stability, and is capable of providing a base material with excellent water and oil repellency.

## Description

### Technical Field

The present invention relates to an aqueous water- and oil-repellent dispersion, and particularly relates to an aqueous water- and oil-repellent dispersion containing a compound which captures chlorine.

### Background Arts

It is known that a polymer prepared from a polymerizable compound having a perfluoroalkyl or perfluoroalkenyl group and an acrylate or methacrylate group is useful as a water- and oil-repellent agent used for a textile and woven fabric. Particularly an aqueous dispersion wherein said polymer is dispersed in an aqueous medium with a surfactant is industrially and widely used.
It is generally also known that the copolymerization of a chlorine-containing polymerizable compound such as vinyl chloride, vinylidene chloride and alpha-chloroacrylate with the above-mentioned fluorine-containing polymerizable compound can impart excellent durability.

It, however, is also known that the storage of these copolymers for long term causes an emulsion to become an unstable state, whereby giving the decrease of performance at the treatment.
In order to solve this problem, JP-A-04-80218 proposes that the concentration of an unreacted vinyl chloride monomer or vinylidene chloride monomer is decreased to at most 10 ppm, and JP-A-04-80219 proposes that the concentration of a chloride ion is adjusted to at most 20 mol%/L.
In these proposals, however, the storage stability at normal temperature is not sufficient, and the storage stability at high temperature is very poor, particularly in the use of the nonionic surfactant.

### Disclosure of the Invention

### Problems to be Solved by the Invention

An object of the present invention is to provide a water- and oil-repellent dispersion which has excellent storage stability and which can impart excellent water- and oil-repellency to a substrate.

### Means for Solving Problems

The present invention relates to an aqueous water- and oil-repellent dispersion comprising:
(I) a copolymer comprising a polymerizable compound having a perfluoroalkyl or perfluoroalkenyl group and an acrylate group, methacrylate group or alpha-substituted acrylate group, a chlorine-containing polymerizable compound, and, optionally present, another copolymerizable compound copolymerizable with the foregoing monomers, and
(II) a hydrochloric acid-trapping compound.

### Effect of the Invention

Since hydrochloric acid evolved from the chlorine-containing polymerizable compound such as vinyl chloride, vinylidene chloride and alpha-chloroacrylate at the time passing is trapped (for example, by an epoxy compound and a weak base), a water- and oil-repellent dispersion having no stability deterioration and no performance deterioration after storage for a long time can be obtained.
In addition, it was also found that the present invention has the effect of preventing the yellowing of a cloth.

### Best Mode for Carrying out the Invention

### [Polymer (I)]

The polymer (I) is a polymer which comprises a polymerizable compound (that is, a fluorine-containing polymerizable compound) having a perfluoroalkyl or perfluoroalkenyl group and an acrylate, methacrylate or alpha-substituted acrylate group, a chlorine-containing polymerizable compound and optionally present another polymerizable compound.

Examples of the fluorine-containing polymerizable compound include (meth)acrylates represented by the formulas:

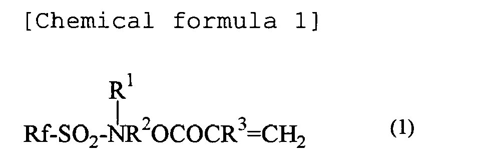

Rf-(CH₂)ₙOCOCR³=CH₂ (2)

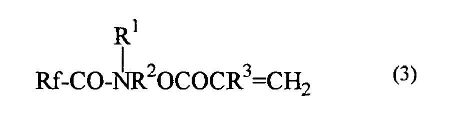

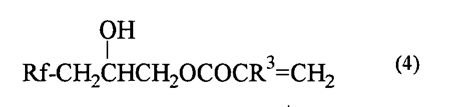

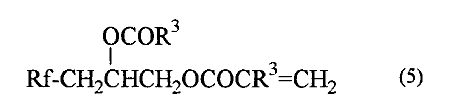

Rf-O-Ar-CH₂OCOCR³=CH₂ (6)

wherein Rf is a perfluoroalkyl group or perfluoroalkenyl group having 1 to 21 carbon atoms,
R¹ is hydrogen or an alkyl group having 1 to 10 carbon atoms,
R² is an alkylene group having 1 to 10 carbon atoms,
R³ is a hydrogen atom, a methyl group, a fluorine atom, a chlorine atom, a bromine atom, an iodine atom, a CFX¹X² group (provided that X¹ and X² are a hydrogen atom, a fluorine atom, a chlorine atom, a bromine atom or an iodine atom.), a cyano group, a linear or branched fluoroalkyl group having 1 to 21 carbon atoms, a substituted or unsubstituted benzyl group, or a substituted or unsubstituted phenyl group,
Ar is an aryl group which may have a substituent group, and n is an integer of 1 to 10.

In the above formulas, the Rf group is preferably a perfluoroalkyl group. The carbon number of the Rf group is from 1 to 21, particularly from 2 to 20, especially from 4 to 16, for example, from 6 to 14. Alternatively, the carbon number of the Rf group may be from 1 to 6, particularly from 1 to 4. Examples of the Rf group include -CF₃, -CF₂CF₃, -CF₂CF₂CF₃, -CF(CF₃)₂, -CF₂CF₂CF₂CF₃, -CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₃, -(CF₂)₃CF(CF₃)₂, -(CF₂)₄CF(CF₃)₂, -(CF₂)₇CF₃, -(CF₂)₅CF(CF₃)₂, -(CF₂)₆CF(CF₃)₂ and -(CF₂)₉CF₃.

Specific examples of the fluorine-containing polymerizable compound having an acrylate or methacrylate group are as follows:
CF₃(CF₂)₇ (CH₂)OCOCH=CH₂,
CF₃(CF₂)₆(CH₂)OCOC(CH₃)=CH₂,
(CF₃)₂CF(CF₂)₆(CH₂)₂OCOCH=CH₂,
CF₃(CF₂)₇(CH₂)₂OCOC(CH₃)=CH₂,
CF₃(CF₂)₇(CH₂)₂OCOCH=CH₂,
CF₃CF₂(CH₂)₂OCOCH=CH₂,
CF₃(CF₂)₃(CH₂)₂OCOCH=CH₂,
CF₃(CF2)₇SO₂N(CH₃)(CH₂)₂OCOCH=CH₂,
CF₃(CF₂)SO₂N(C₂H₅)(CH₂)₂OCOC(CH₃)=CH₂,
(CF₃)₂CF(CF₂)₆CH₂CH(OCOCH₃)CH₂OCOC(CH₃)=CH₂,
(CF₃)₂CF(CF₂)₆CH₂CH(OH)CH₂OCOCH=CH₂

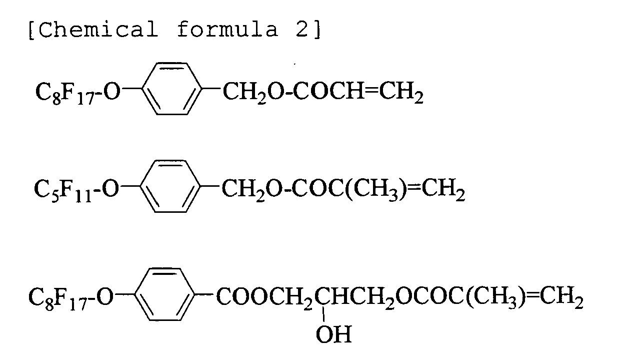

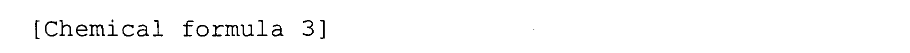

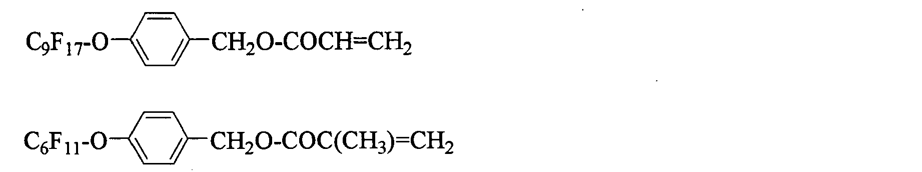

In the alpha-substituted acrylate group, examples of the alpha-substituent are a halogen atom (for example, a fluorine atom, a chlorine atom, a bromine atom or a iodine atom), an alkyl group (for example, having 1 to 21 carbon atoms) wherein a hydrogen atom is substituted with a halogen atom (for example, a monofluoromethyl group or difluoromethyl group), a cyano group, an aromatic group (for example, a substituted or unsubstituted benzyl group, and a substituted or unsubstituted phenyl group).

Examples of the fluorine-containing polymerizable compound having the alpha-substituted acrylate group are as follows:

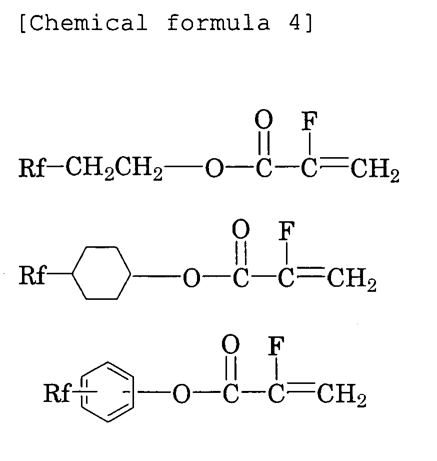

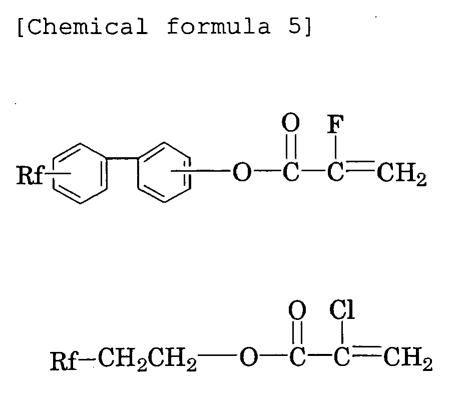

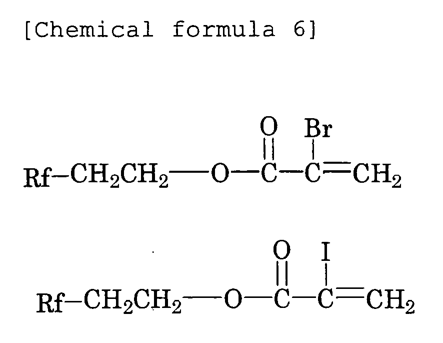

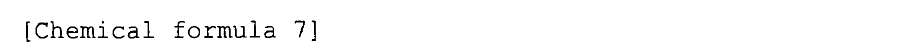

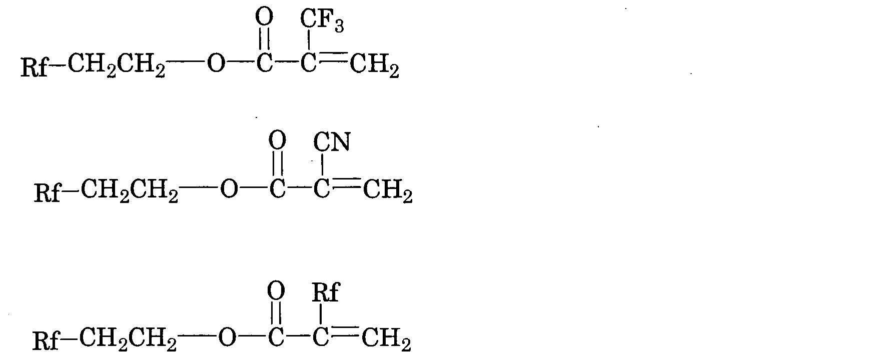

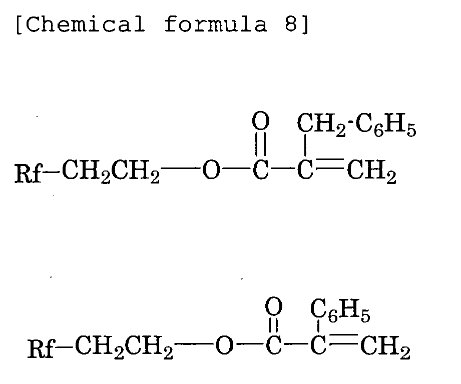

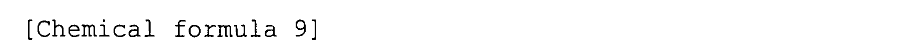

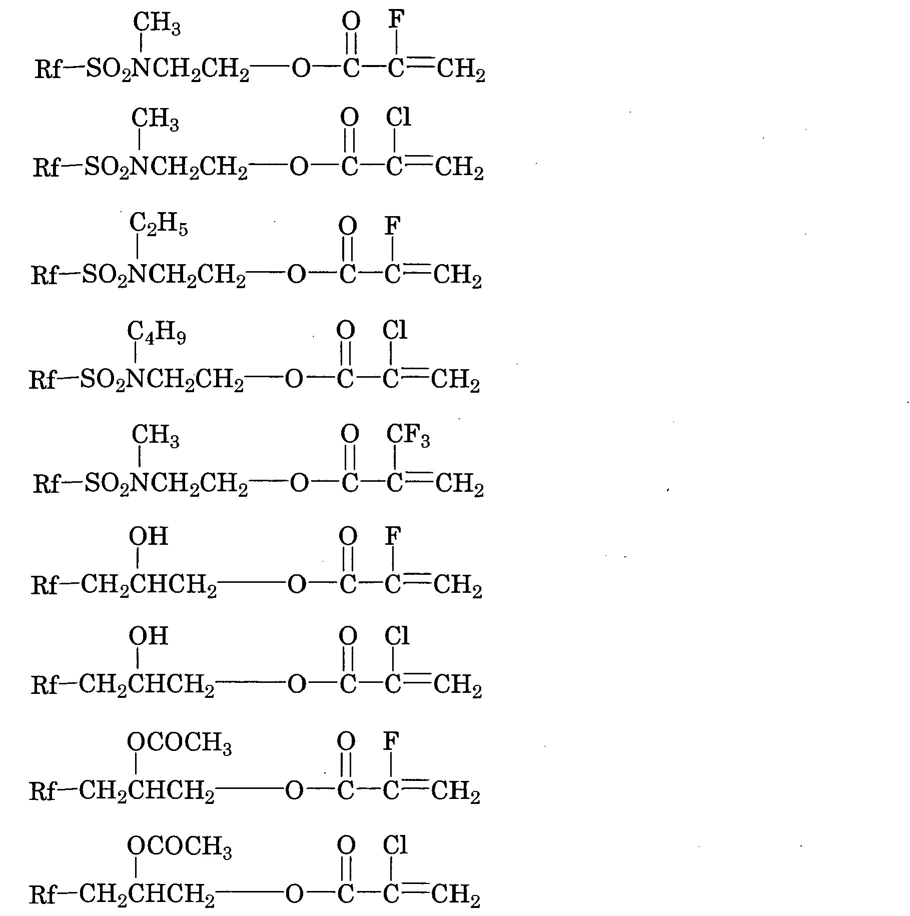

wherein Rf is a linear or branched perfluoroalkyl or perfluoroalkenyl group having 1 to 21 carbon atoms.

The chlorine-containing polymerizable compound is a compound having chlorine and a carbon-carbon double bond. Examples of the chlorine-containing polymerizable compound are vinyl chloride, vinylidene chloride, alpha-chloroacrylate (for example, an alkyl (having 1 to 30 carbon atoms) ester) and 3-chloro-2-hydoxypropyl methacrylate.

The other copolymerizable compound may be various. Examples of the other copolymerizable compound include:
(1) acrylic acid and methacrylic acid, and methyl, ethyl, butyl, isobutyl, t-butyl, propyl, 2-ethylhexyl, hexyl, decyl, lauryl, stearyl, isobornyl, β-hydroxyethyl, glycidyl, phenyl, benzyl and 4-cyanophenyl esters thereof;
(2) vinyl esters of fatty acids such as acetic acid, propionic acid, caprylic acid, lauric acid and stearic acid;
(3) styrene compounds such as styrene, α-methylstyrene and p-methylstyrene;
(4) vinyl and vinylidene halide (except chloride) compounds such as vinyl fluoride, vinyl bromide, vinylidene fluoride;
(5) fatty acid allyl esters such as allyl heptanoate, allyl caprylate and allyl caproate;
(6) vinyl alkyl ketones such as vinyl methyl ketone and vinyl ethyl ketone;
(7) acryl amides such as N-methylacrylamide and N-methylolmethacrylamide; and
(8) dienes such as 2,3-dichloro-1,3-butadiene and isoprene.

In the polymer (I), the amount of the fluorine-containing polymerizable compound may be from 30 to 90% by weight, for example, from 50 to 80% by weight, the amount of the chlorine-containing polymerizable compound may be from 1 to 50% by weight, for example, from 5 to 30% by weight, and the amount of the other polymerizable compound may be from 0 to 50% by weight, for example, from 5 to 30% by weight, based on the polymer (I).
The weight-average molecular weight of the polymer (I) may be from 5,000 to 2,000,000, for example, from 10,000 to 500,000 (in terms of polystyrene), as measured by a gel permeation chromatography (GPC).

### [Hydrochloric acid-trapping agent (II)]

Examples of the hydrochloric acid-trapping compound (II) include an epoxy compound and a weakly basic compound. A combination of the epoxy compound and the weakly basic compound is preferred as the hydrochloric acid-trapping compound (II).
Examples of the epoxy compound include an epoxidized vegetable oil and an epoxidized fatty acid ester. Examples of the epoxidized vegetable oil include an epoxidized soybean oil, an epoxidized linseed oil, an epoxidized cotton seed oil, and epoxidized carthamus oil.

The epoxidized soybean oil is, for example, a compound of the formula:

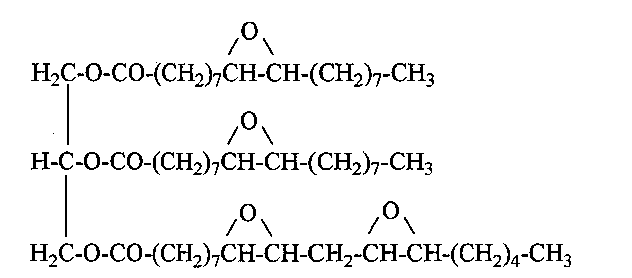

The epoxidized linseed oil is, for example, a compound of the formula:

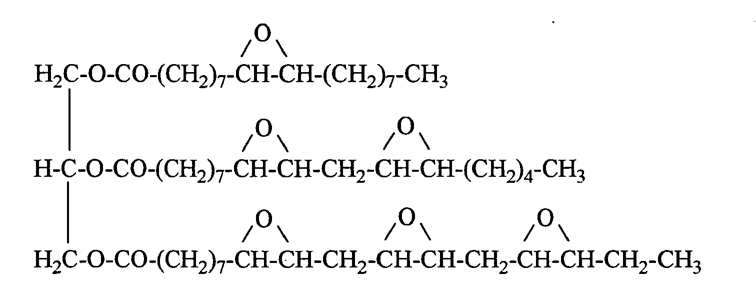

The weakly basic compound is a compound exhibiting a weak basicity. Examples of the weakly basic compound include a metal salt of an acid. In the metal salt of the acid, the acid may be an inorganic acid or an organic acid, and the metal may be an alkali metal or an alkaline earth metal. Examples of the weakly basic compound include sodium hydrogen carbonate, sodium carbonate, ammonia, magnesium hydroxide, copper hydroxide, aluminum hydroxide and iron hydroxide. The pH of a treatment bath for applying the aqueous dispersion to a substrate is generally from 3 to 8, particularly from 4 to 7.

The amount of the hydrochloric acid-trapping compound (II) may be from 0.5 to 50 parts by weight, particularly from 1 to 20 parts by weight, based on 100 parts by weight of the fluorine-containing polymer. When the epoxy compound and the weakly basic compound are used in combination, the weight ratio of the epoxy compound and the weakly basic compound may be from 9.9:0.1 to 1:9, particularly from 9.5:0.5 to 5:5.

### [Surfactant]

In the present invention, the surfactant is generally used for the purpose of intimately dispersing the fluorine-containing polymer into the aqueous dispersion liquid. The surfactant may be nonionic or ionic (for example, cationic, anionic or amphoteric). As the surfactant, preferably used are a nonionic surfactant and/or a cationic surfactant. Preferably, the surfactant consists of the nonionic surfactant or a combination of the nonionic surfactant and the cationic surfactant.

Specific examples of the nonionic surfactant used in the present invention include polyoxyethylene lauryl ether, polyoxyethylene tridecyl ether, polyoxyethylene cetyl ether, polyoxyethylene polyoxypropylene cetyl ether, polyoxyethylene stearyl ether, polyoxyethylene oleyl ether, polyoxyethylene monolaurate, polyoxyethylene monostearate, polyoxyethylene mono-oleate, sorbitan monolaurate, sorbitan monostearate, sorbitan monopalmitate, sorbitan monostearate, sorbitan mono-oleate, sorbitan sesqui-oleate, sorbitan trioleate, polyoxyethylene sorbitan monolaurate, polyoxyethylene sorbitan monopalmitate, polyoxyethylene sorbitan monostearate, polyoxyethylene sorbitan mono-oleate, polyoxyethylene polyoxypropylene block polymer, polyglycerin fatty acid ester, polyether-modified silicone oil (SH3746, SH3748, SH3749 and SH3771 manufactured by Toray Dow Corning Silicone Co., Ltd.), perfluoroalkyl ethylene oxide adduct (UNIDYNE DS-401 and DS-403 manufactured by Daikin Industries, Ltd.), fluoroalkyl ethylene oxide adduct (UNIDYNE DS-406 manufactured by Daikin Industries, Ltd.), and perfluoroalkyl oligomer (UNIDYNE DS-451 manufactured by Daikin Industries, Ltd.).

Examples of the commercially available product of the nonionic surfactant includes polyoxyethylene oleyl ether (trade name: EMULGEN 430, manufactured by Kao Corporation), polyoxyethylene lauryl ether (trade name: NIKKOL BL-21, manufactured by Nikko Chemicals Co., Ltd.).

Examples of the cationic surfactant includes dodecyl trimethyl ammonium acetate, trimethyl tetradecyl ammonium chloride, hexadecyl trimethyl ammonium bromide, trimethyl octadecyl ammonium chloride, behenyl trimethyl ammonium chloride, (dodecylmethylbenzyl) trimethyl ammonium chloride, didodecyl dimethyl ammonium chloride, dioctadecyl dimethyl ammonium chloride, benzyl dodecyl dimethyl ammonium chloride, benzyl tetradecyl dimethyl ammonium chloride, benzyl octadecyl dimethyl ammonium chloride, methyl dodecyl di(hydropolyoxyethylene) ammonium chloride, benzyl dodecyl di(hydropolyoxyethylene) ammonium chloride and N-[2-(diethylamino)ethyl]oleamide hydrochloride.

In the present invention, it is preferable to use three nonionic surfactants. The three nonionic surfactants are preferably three surfactants which are: (a) a nonionic surfactant having an HLB of less than 12, (b) a nonionic surfactant having an HLB of not less than 12 and less than 17, and (c) a nonionic surfactant having an HLB of not less than 17, are used. As the HLB value, adopted is a value shown in a brochure when the brochure shows the HLB value, and is a measured value (measured according to W. G. Griffin, J. Soc. Cosmetic Chemists, 1, 311 (1949) and W. G. Griffin, J. Soc. Cosmetic Chemists, 5, 249 (1954)) when brochures do not show an HLB value.

### Examples of the surfactants (a), (b) and (c) are as follows:

(a): NONION PP-40R(HLB value:6.7) manufactured by NOF Corp.
(b): NONION PT-221(HLB value:15.6) manufactured by NOF Corp.
(c): NONION S-40(HLB value:18.2) manufactured by NOF Corp.

The amount of the surfactant may be from 1 to 30 parts by weight, particularly from 5 to 20 parts by weight, based on 100 parts by weight of the fluorine-containing polymer (I). When the nonionic surfactant is combined with the cationic surfactant, the amount of the cationic surfactant may be at most 100 parts by weight, particularly from 0.1 to 50 parts by weight, based on 100 parts by weight of the nonionic surfactant. When the above-mentioned three nonionic surfactants (a) to (c) having different HLB values, the weight ratio of the nonionic surfactant (a): the nonionic surfactant (b): the nonionic surfactant (c) is preferably 10 to 40:50 to 80:5 to 30, particularly, 20 to 40:50 to 70:10 to 20.

### [Organic Solvent]

The aqueous water- and oil-repellent dispersion of the present invention may contain or may not contain an organic solvent. Water-soluble organic solvents can be used as the organic solvent. The amount of the organic solvent may be from 0 to 200 parts by weight, for example, from 0 to 100 parts by weight, particularly from 1 to 50 parts by weight, based on 100 parts by weight of the polymer.

The dispersion according to the present invention can be prepared by emulsion-polymerizing the polymerizable compound(s) in water optionally accompanied by the organic solvent in the presence of the surfactant to give an emulsion of the polymer. Water and/or surfactant may be added to the emulsion of the polymer to give the aqueous water- and oil-repellent dispersion. The polymer concentration in the aqueous water- and oil-repellent dispersion is, for example, from 0.1 to 50 % by weight.

Examples of a suitable substrate, to which the dispersion according to the present invention is applied, include a film, a fiber, a yarn, a woven fabric, a carpet, a filament made from a natural polymer material, a modified natural polymer material and a synthetic polymer material, and a product made from a fiber or a yarn. The substrate is preferably a textile which is in the form of a fiber, a yarn or a fabric.

The dispersion according to the present invention can be applied to the substrate preferably by coating, dipping, spraying, padding, roll coating, or combination of these procedures. For example, a padding bath having the bath solid content of 0.1 to 10 % by weight can be used. The substrate is padded in the bath, and then excess liquid is usually removed by a squeezing roll to give the dry pickup amount (the weight of dry polymer on the substrate) of from 0.01 to 10 % by weight based on the weight of the substrate. Then, the treated substrate is preferably heated at 100-200 °C.

### Examples

Examples and Comparative Examples are shown hereinafter to illustrate the present invention in detail.

### Evaluations are conducted in Examples and Comparative Examples as follows:

### Wash Durability of Water- and Oil-repellency

An aqueous dispersion is diluted with tap water to the solid content of 1.0% by weight, to prepare a treatment liquid. A cotton cloth is immersed in the treatment liquid, squeezed with a mangle to give a wet pick up of 60%, dried at 100°C for 2 minutes, and heat-treated at 160°C for 1 minute. Washing of AATCC-135 method is repeatedly conducted three times and then the water- and oil-repellency of the treated cloth (HL-3) is evaluated.
Water repellency: AATCC-22 method
Oil repellency: AATCC-118 method

### Storage Stability

The average particle diameter (scattering intensity) of an aqueous dispersion (solid content: 30% by weight) is measured at the initial and after the storage at 50°C for one month by FPAR-1000 manufactured by Otsuka Electronics Co., Ltd. and the storage stability is evaluated in the following criteria:
Good: Change rate of smaller than 10%
Fair: Change rate of 10% to 20%
Poor: Change rate of larger than 20%

### Yellowing of Cloth

An aqueous dispersion is diluted with tap water to the solid content of 1.0% by weight, to prepare a treatment liquid. A cotton cloth is immersed in the treatment liquid, squeezed with a mangle to give a wet pick up of 60%, dried at 100°C for 2 minutes, and heat-treated at 160°C for 1 minute. A difference of the b value between the treated cloth and the untreated cloth is measured by CR-300 Color Difference Meter manufactured by Minolta Co., Ltd. and evaluated in the following criteria:
Good: Δb of smaller than 0.1
Fair: Δb of 0.1 to 0.5
Poor: Δb of larger than 0.5

### Example 1

Into a 1 L autoclave, CₙF₂ₙ₊₁CH₂CH₂OCOCH=CH₂ (a mixture of compounds wherein n is 6, 8, 10, 12 and 14 (average of n: 8)) (FA) (a fluorine-containing monomer) (150 g), stearyl acrylate (75 g), N-methylolacrylamide (3 g), pure water (300 g), tripropylene glycol (80 g), polyoxyethylene lauryl ether (25 g) and an epoxidized soybean oil (10 g) were charged and emulsified by ultrasonic wave at 40°C for 30 minutes with stirring. After the emulsification, n-dodecyl mercaptan (1 g) was added and then vinyl chloride (a chlorine-containing polymerizable compound) (40 g) was injected. Further, azobisisobutylamidine dihydrochloride (0.8 g) was added and the reaction was conducted at 60°C for 5 hours to give an aqueous dispersion containing a polymer. The composition of the polymer was that the reaction conversion of vinyl chloride was about 80% and the reaction conversions of the other monomers were about 100%. Sodium hydrogen carbonate (0.7 g) was added to this aqueous dispersion to give an aqueous water- and oil-repellent dispersion having the adjusted pH of 7.
For the aqueous water- and oil-repellent dispersion, evaluated were washing durability at the initial and after storage at 40°C for one month, and the yellowing of cloth at the initial.
The results are shown in Table 1.

### Examples 2 to 5

The same procedure as in Example 1 was repeated except that the same amounts of the compounds shown in Table 1 were used as the chlorine-containing polymerizable compound and the epoxy compound. In Example 4, the same amount (105 g) of stearyl alpha-chloroacrylate was used instead of vinyl chloride and stearyl acrylate.
The addition amounts of sodium hydrogen carbonate for change of an aimed pH value were as follows:
Example 2: 0.7 g
Example 3: 0.5 g
Example 4: 0.4 g
Example 5: 1.5 g
The results are shown in Table 1.

### Examples 6 and 7

The same procedure as in Example 1 was repeated except that the same amounts of the compounds shown in Table 1 were used as the chlorine-containing polymerizable compound and the epoxy compound, and octadecyl trimethyl ammonium chloride (3 g in Example 6, and 2 g in Example 7) was added to polyoxyethylene lauryl ether (25g). The results are shown in Table 1.

### Example 8

The same procedure as in Example 1 was repeated except that the same amount (150g) of C₄F₉CH₂CH₂OCOCH=CH₂ was used instead of FA, and sodium carbonate (0.9 g) instead of sodium hydrogen carbonate (0.7 g) was used to adjust the PH to 8. The results are shown in Table 1.

### Example 9

The same procedure as in Example 1 was repeated except that the same amount (150g) of C₄F₉CH₂CH₂OCOCCl=CH₂ was used instead of FA, vinyl chloride was omitted, the amount of stearyl acrylate was increased to 100 g, and sodium carbonate (0.6 g) instead of sodium hydrogen carbonate (0.7 g) was used to adjust the PH to 8. The results are shown in Table 1.

### Example 10

The same procedure as in Example 1 was repeated except that the same amount (150g) of C₂F₅CH₂CH₂OCOCCl=CH₂ was used instead of FA, vinyl chloride was omitted, the amount of stearyl acrylate was increased to 100 g, and sodium carbonate (0.6 g) instead of sodium hydrogen carbonate (0.7 g) was used to adjust the PH to 8. The results are shown in Table 1.

### Example 11

The same procedure as in Example 1 was repeated except that sodium hydrogen carbonate was omitted. The results are shown in Table 1.

### Example 12

The same procedure as in Example 1 was repeated except that the epoxidized soybean oil was omitted. The results are shown in Table 1.

### Comparative Example 1

The same procedure as in Example 1 was repeated except that vinyl chloride, the epoxidized soybean oil and sodium hydrogen carbonate were omitted, and octadecyl trimethyl ammonium chloride (5 g) was added to polyoxyethylene lauryl ether (25 g). The results are shown in Table 1.

### Comparative Example 2

The same procedure as in Example 1 was repeated except that the epoxidized soybean oil and sodium hydrogen carbonate were omitted. The results are shown in Table 1.

### Comparative Example 3

The same procedure as in Example 1 was repeated except that the epoxidized soybean oil was omitted, and sodium hydroxide (0.2 g) instead of sodium hydrogen carbonate (0.7 g) was used to adjust the PH to 9. The results are shown in Table 1.

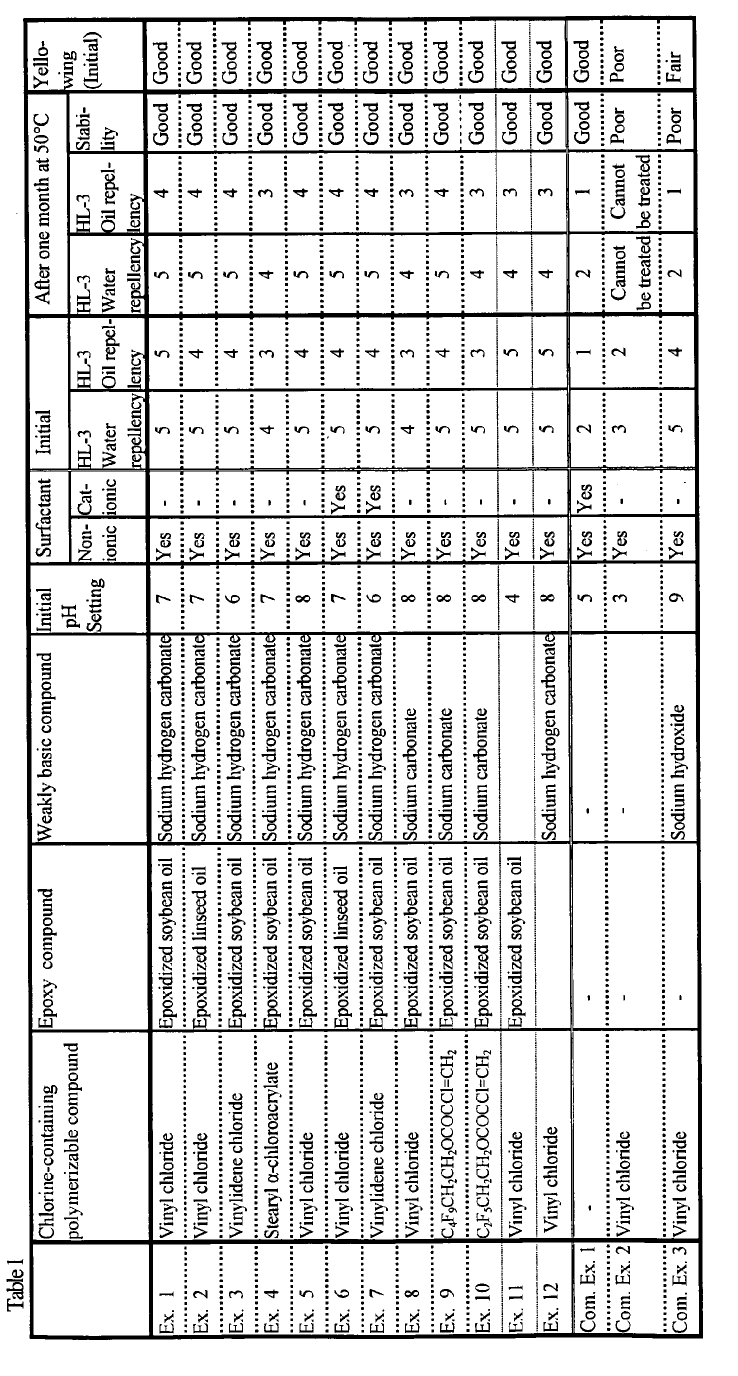

## Claims

1. An aqueous water- and oil-repellent dispersion comprising:
(I) a copolymer comprising a polymerizable compound having a perfluoroalkyl or perfluoroalkenyl group and an acrylate group, methacrylate group or alpha-substituted acrylate group, a chlorine-containing polymerizable compound, and, optionally present, another copolymerizable compound copolymerizable with the foregoing monomers, and
(II) a hydrochloric acid-trapping compound.

2. The aqueous water- and oil-repellent dispersion according to claim 1, wherein the hydrochloric acid-trapping compound is an epoxy compound, a weakly basic compound, or combination thereof.

3. The aqueous water- and oil-repellent dispersion according to claim 2, wherein the epoxy compound is an epoxidized vegetable oil.

4. The aqueous water- and oil-repellent dispersion according to claim 3, wherein the epoxidized vegetable oil is an epoxidized soybean oil or an epoxidized linseed oil.

5. The aqueous water- and oil-repellent dispersion according to claim 2, wherein the weakly basic compound is a metal salt of an acid.

6. The aqueous water- and oil-repellent dispersion according to claim 2, wherein the weakly basic compound is sodium hydrogen carbonate or sodium carbonate.

7. The aqueous water- and oil-repellent dispersion according to claim 1, wherein the chlorine-containing polymerizable compound is vinyl chloride, vinylidene chloride, alpha-chloroacrylate or 3-chloro-2-hydroxypropyl methacrylate.

8. The aqueous water- and oil-repellent dispersion according to anyone of claims 1 to 7, wherein the aqueous dispersion also contains a surfactant which consists of a nonionic surfactant.

9. The aqueous water- and oil-repellent dispersion according to claim 8, wherein the nonionic surfactant is three surfactants having different HLB values.

10. A textile to which the aqueous dispersion according to anyone of claim 1 to 9 is applied.

11. A method of processing a textile, which comprises using the aqueous dispersion according to anyone of claim 1. to 9.
